# EUROPEAN PATENT APPLICATION

(11) **EP 0 560 197 A1**
(43) Date of publication of application: **15.09.1993**
(21) Application number: 93103392.2
(22) Date of filing: 03.03.1993
(51) Int. Cl.: B60T 8/42

(54) **Brake fluid pressure control apparatus for antiskid brakes**

(30) Priority: 05.03.1992 JP 48918/92
(71) Applicant: TOKICO LTD., Kawasaki-shi Kanagawa-ken (JP)
(72) Inventor: Suga, Satoru, Nakakoma-gun, Yamanashi-ken (JP); Ando, Hiromi, Nakakoma-gun, Yamanashi-ken (JP)
(74) Representative: Kehl, Günther, Dipl.-Phys.

(57) **Abstract**

A brake fluid pressure control apparatus (1) is provided with a control bypass path (30) connecting a master cylinder (3) and the discharge side of a pump (9), and on this control bypass path (30), a control valve (31) is provided which closes when braking is conducted and the fluid pressure generated by means of a master cylinder (3) becomes high, and which opens when braking is released and the fluid pressure generated by the master cylinder (3) becomes low. As a result, when the fluid pressure generated by the master cylinder (3) becomes low, control valve (31) places the master cylinder (3) and the discharge side of the pump (9) in a state of communication via a control bypass path (30). Accordingly, when braking is released, the remaining fluid in reservoir which was let in by the pump (9) is discharged directly to the master cylinder (3) via the bypass path (30). As a result, this brake fluid does not flow to the wheel cylinder (5) via the flow valve, and it is possible to promptly reduce the fluid pressure of the wheel cylinder (5).

## Description

### Background of the Invention

### Field of the Invention

The present invention relates to a brake fluid pressure control apparatus for antiskid brakes of wheeled vehicles and the like.

### Background Art

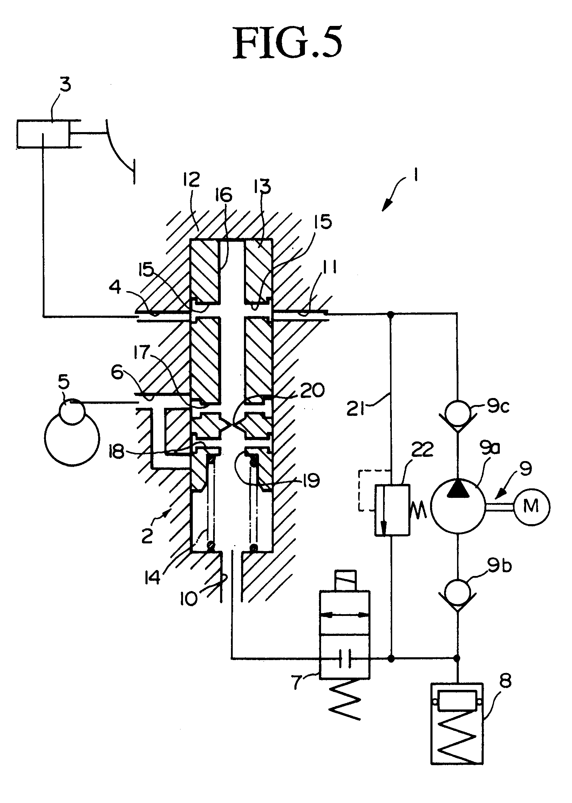

In Fig. 5, an example is shown of the structure of a brake fluid pressure control apparatus applied to the braking apparatus of a vehicle for the purpose of preventing the occurrence of a locked state of the wheels at the time of braking.

This brake fluid pressure control apparatus 1 possesses a master cylinder which delivers brake fluid pressure when the brake pedal is pressed, wheel cylinders which brake the vehicle by means of this brake fluid pressure, normally-closed valves which are opened when the brake fluid pressure is to be reduced and are closed when the brake fluid pressure is to be repressurized, a reservoir into which brake fluid flows when brake fluid pressure is reduced, a pump which lets in and discharges the brake fluid within the reservoir, and a flow valve. Pump 9 is comprising a pump body 9a which conducts intake and discharge, an intake valve 9b which is provided at the reservoir 8 side of pump body 9a, and a discharge valve 9c which is provided at the side of pump body 9a which is opposite to that of reservoir 8.

Flow valve 2 is provided with a casing 12 having a master cylinder communication port 4, which communicates with master cylinder 3, a wheel cylinder communication port 6, which communicates with wheel cylinder 5, a reservoir communication port 10, which communicates with reservoir 8 and with the intake side of pump 9 via electromagnetic normally-closed valve 7, and pump communication port 11, which communicates with the discharge side of pump 9.

A spool 13 is provided in a movable manner within casing 12.

Force is exerted on spool 13 by means of a spring 14. When spool 13 is in a stationary state in which force is exerted upon it by spring 14 (the state shown in Fig. 5), master cylinder 3 and wheel cylinder 5 are in communication via master cylinder communication port 4, first hole 15, upper hole 16, second hole 17, and wheel cylinder communication port 6.

When the antiskid control pressure is reduced, spool 13 moves in a direction corresponding to the downward direction in Fig. 5, as a result of the difference in pressure created between both sides of spool 13 as a result of the opening of electromagnetic normally-closed valve 7, and the communication between master cylinder communication port 4 and wheel cylinder communication port 6 is restricted; that is to say, this communication is reduced in the extreme or is cut off. In addition to this, spool 13 places wheel cylinder 5 and reservoir 8 in a state of communication via wheel cylinder communication port 6, third hole 18, lower hole 19, and reservoir communication port 10; the brake fluid within wheel cylinder 5 is caused to flow to reservoir 8, and the braking fluid pressure of wheel cylinder 5 is reduced. In addition to this, spool 13 circulates an approximate fixed flow amount of the braking fluid which is let in and discharged from the side of reservoir 8 by means of the pump 9, which is in a drive state, via pump communication port 11, first hole 15, upper hole 16, small-diameter hole 20, lower hole 19, and reservoir communication port 10.

Furthermore, at the time of the re-increase of antiskid control pressure, an approximate fixed flow amount of the brake fluid which is discharged from pump 9 is supplied to the wheel cylinder 5 by means of the closure of electromagnetic normally-closed valve 7 and via pump communication port 11, first hole 15, upper hole 16, small-diameter hole (restricted orifice) 20, lower hole 19, third hole 18, and wheel cylinder communication port 6.

Furthermore, this brake fluid pressure control apparatus 1 is provided with a relief bypass path 21 which connects reservoir 8 with a path between the discharge side of pump 9 and the pump communication port 11 of flow valve 2. A relief valve 22, which permits the escape of excess discharge pressure from pump 9 to the side of reservoir 8, is provided on this relief bypass path 21. Here, the relief valve 22 is set so as to open in the case in which the pressure on the discharge side of pump 9 exceeds a fixed value. Furthermore, the valve-opening pressure of this relief valve 22 conforms to the varying fluid pressure of the master cylinder 3, and is set so as to always exceed by a fixed amount the fluid pressure generated by means of master cylinder 3.

In addition, in the brake fluid pressure control apparatus 1 having the structure described above, when antiskid control is halted, the brake fluid which remains within reservoir 8 is returned to master cylinder 3 by means of a slight excess driving of pump 9 and via flow valve 2.

However, in the brake fluid pressure control apparatus 1 having the structure described above, even if the brake pedal is returned to its original position and braking is thus halted, while antiskid control is in effect, the remaining fluid within reservoir 8 which is let in and discharged by means of pump 9 flows in an undesirable manner to wheel cylinder 5 via flow valve 2. As a result, the fluid pressure of wheel cylinder 5 is not reduced; that is to say, an overshoot phenomenon occurs, so that with respect to this point, an improvement is necessary.

### Summary of the Invention

The present invention has as an object thereof to provide a brake fluid pressure control apparatus which is capable of preventing the occurrence of an overshoot phenomenon which occurs at the time of the cancellation of braking during antiskid control, and which is capable of rapidly lowering wheel cylinder fluid pressure in response to the cancellation of braking.

In order to attain the above object, the present invention comprises:
a pressure control apparatus for antiskid brake systems of wheeled vehicles, comprising:
(A) a master cylinder for delivering pressure by means of a brake fluid in accordance with an operation of a brake pedal;
(B) a wheel cylinder for exerting braking force to a wheel by means of brake fluid pressure;
(C) a normally closed valve for opening and closing at decrease and increase of brake fluid pressure, respectively;
(D) a reservoir for receiving brake fluid at decrease of brake fluid pressure;
(E) a pump for charging with the brake fluid from the reservoir and for discharging the brake fluid, the pump having an intake side and an discharge side;
(F) a flow valve including
   (a) a casing having
      (1) a master cylinder communication port for communicating with the master cylinder,
      (2) a wheel cylinder communication port for communicating with the wheel cylinder,
      (3) a reservoir communication port for communicating with the reservoir and the intake side of the pump through the normally-closed valve, and
      (4) a pump communication port for communicating with the discharge side of the pump,
   (b) a spool movable within the casing, and
   (c) a spring for urging the spool toward a stationary position,
   wherein when the spool is at the stationary position, communication between the master cylinder communication port and the wheel cylinder communication port is enabled; and when the spool is displaced from the stationary position due to a pressure difference on both side thereof resultant from opening of the normally-closed valve, communication between the master cylinder communication port and the wheel cylinder communication port is restricted, the wheel cylinder communication port is communicated with the reservoir communication port, and, in a state in which the normally-closed valve is closed, an approximate fixed flow amount of the brake fluid from the pump communication port to the wheel cylinder communication port is enabled,
(G) a control bypass line for connecting the master cylinder and the discharge side of the pump, and
(H) a control valve provided on the control bypass line for closing the bypass line when brake fluid pressure is higher a predetermined value, and for opening the bypass line when brake fluid pressure is not higher than the predetermined value.

In the structure of the present invention, a control valve is provided on the control bypass path which connects the master cylinder and the discharge side of the pump. This control valve closes when braking is conducted and the fluid pressure generated by means of the master cylinder increases, and the communication of the master cylinder and the discharge side of the pump via this control bypass path is cut off. The control valve opens when braking is released, and the fluid pressure generated by means of the master cylinder is reduced, and thus a state of communication is established between the master cylinder and the discharge side of the pump via the control bypass path. Accordingly, when braking is released, the remaining fluid within the reservoir which is let in by means of the pump is discharged directly to the master cylinder via the control bypass path, so that this fluid does not flow in an undesirable manner to the wheel cylinder via the flow valve.

Accordingly, the nonreduction of the fluid pressure within the wheel cylinder, that is to say, the overshoot phenomenon, does not occur, and the fluid pressure of the wheel cylinder can be promptly reduced in accordance with the release of braking.

### Brief Description of the Diagrams

Fig. 1 is a structural diagram showing an outline of a brake fluid pressure control apparatus in accordance with a first preferred embodiment of the present invention; it shows the state in which braking has been released.

Fig. 2 is a structural diagram showing an outline of a brake fluid pressure control apparatus in accordance with a first preferred embodiment of the present invention; it shows a state in which braking is being conducted.

Fig. 3 is a structural diagram showing an outline of a brake fluid pressure control apparatus in accordance with a first preferred embodiment of the present invention; it shows the state in which the excess discharge pressure of the pump is allowed to escape at the time of antiskid control.

Fig. 4 is a structural diagram showing an outline of a brake fluid pressure control apparatus in accordance with a second preferred embodiment of the present invention; it shows a state in which braking has been released.

Fig. 5 is a structural diagram showing an outline of a conventional brake fluid pressure control apparatus.

### Detailed Description of the Preferred Embodiments

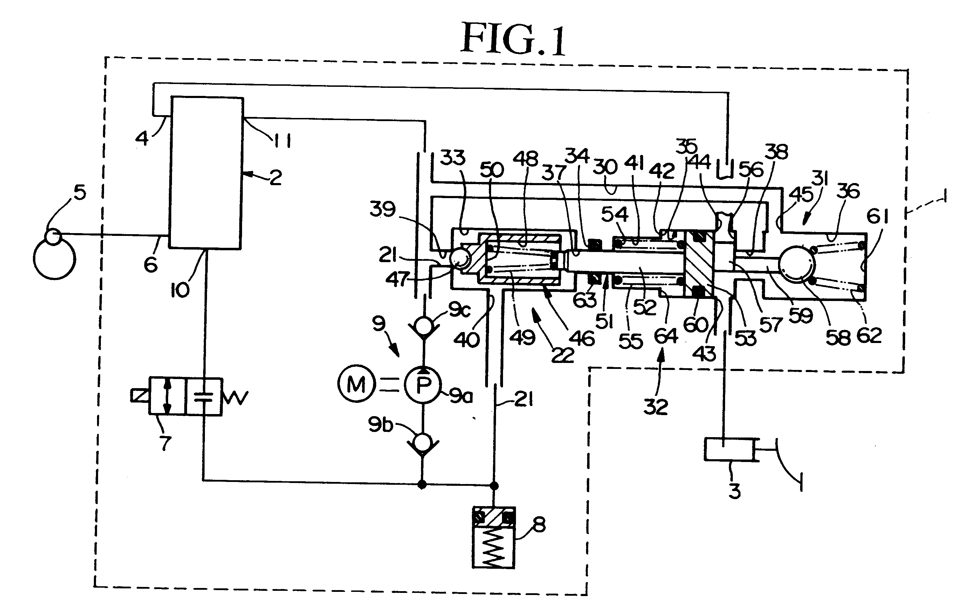

A brake fluid pressure control apparatus in accordance with a first preferred embodiment of the present invention will be explained hereinbelow with reference to Figs. 1 to 3. In this first preferred embodiment and in the second preferred embodiment discussed hereinbelow, parts such as the flow valve and the like which are identical to those described in the discussion of the background art are numbered identically, and an explanation thereof will be omitted; explanation will center on those parts which differ from the background art.

In the brake fluid pressure control apparatus 1 in accordance with the first preferred embodiment, a relief bypass path 21 is provided which connects reservoir 8 and a path between the discharge side of pump 9 and the pump communication port 11 of flow valve 2. Furthermore, a control bypass path 30 is provided which connects master cylinder 3 and the path between the discharge side of pump 9 and the pump communication port 11 of the flow valve 2. Bypass mechanism 32, which is formed integrally with relief valve 22 and control valve 31, is provided on relief bypass path 21 and control bypass path 30. Relief valve 22 permits the escape of excess discharge pressure of pump 9 to the side of reservoir 8. Control valve 31 closes when braking is conducted and the fluid pressure generated by means of master cylinder 3 rises, and opens when braking is released and the fluid pressure generated by means of master cylinder 3 is reduced.

Valve mechanism 32 is provided with a first valve chamber 33, a seal chamber 34, a control chamber 35, and a second valve chamber 36. Seal chamber 34 is provided so as to be separated from first valve chamber 33. Control chamber 35 is provided on the opposite side of the seal chamber 34 with respect to the first valve chamber 33, in such a manner as to be separated from seal chamber 34. Second valve chamber 36 is provided on the opposite side of control chamber 35 with respect to seal chamber 34, in such a manner as to be separated therefrom.

A through hole 37 is provided between first valve chamber 33, and control chamber 35 so as to penetrate this first valve chamber 33, seal chamber 34, and control chamber 35. A communication hole (forming a part of control bypass path 30) 38 is provided between control chamber 35 and second valve chamber 36 so as to place control chamber 35 and second valve chamber 36 in a state of mutual communication. First valve chamber 33, seal chamber 34, control chamber 35, second valve chamber 36, through hole 37, and communication hole 38 are disposed so as to be coaxial.

First valve chamber 33 is provided with first pump discharge connection port 39 and reservoir connection port 40. First pump discharge connection port 39 is provided at the opposite side of first valve chamber 33 with respect to seal chamber 34, and coaxially with first valve chamber 33; first pump discharge connection port 39 is connected to the discharge side of pump 9 via a part of relief bypass path 21. Reservoir connection port 40 is provided in a perpendicular manner with respect to first valve chamber 33; it is connected to reservoir 8 via a part of relief bypass path 21.

Control chamber 35 is comprising small diameter chamber 41 and large diameter chamber 42. Small diameter chamber 41 is provided in a position closest to that of seal chamber 34. Large diameter chamber 42 is provided on the opposite side of small diameter chamber 41 with respect to seal chamber 34; large diameter chamber 42 has a diameter which is larger than that of small diameter chamber 41 by a fixed amount.

Large diameter chamber 42 is provided with master cylinder connection port 43 and flow valve connection port 44.

Master cylinder connection port 43 is provided at the opposite side of large diameter chamber 42 with respect to small diameter chamber 41, and is provided in a direction perpendicular to the axis of large diameter chamber 42; moreover, master cylinder connection port 43 is connected to master cylinder 3. Flow valve connection port 44 is provided at the opposite side of large diameter chamber 42 with respect to master cylinder connection port 43; moreover, flow valve connection port 44 is connected to master cylinder communication port 4 of flow valve 2.

Second valve chamber 36 is provided with second pump discharge connection port 45. This second pump discharge connection port 45 is provided in a direction perpendicular to the axis of second valve chamber 36; moreover, second pump discharge connection port 45 is connected to the discharge side of pump 9 of control bypass path 30.

A valve member 46 having a diameter smaller than that of first valve chamber 33 is inserted in first valve chamber 33. A valve 47 which is capable of closing first pump discharge connection port 39 is provided on valve member 46 at a position opposite first pump discharge connection port 39. Spring insertion hole 48 is provided at the side of valve member 46 opposite to that of valve 47. Valve member spring 49 having a fixed force is inserted in spring insertion hole 48 so that one end thereof is in contact with bottom 50.

Control piston 51 is inserted in through hole 37 and control chamber 35. This control piston 51 is provided with axial part 52 and piston part 53.

Axial part 51 is inserted in through hole 37, and the other end of the valve member spring 49 described above is inserted in the lead end part thereof. Piston part 53 is provided on the same side of axial part 52 as second valve chamber 36. Piston part 53 has a diameter which is larger than that of axial part 52 by a fixed amount, and is engaged within large diameter chamber 42 of control chamber 35 in a slidable manner.

A control spring 55 having a fixed force is provided between piston part 53 and end surface 54 of control chamber 35 which is opposed thereto. Furthermore, contact part 57 is provided on the opposite side of piston part 53 from the side of axial part 52. Contact part 57 is capable of coming into contact with end surface 56 of control chamber 35, which is opposed thereto, so that communication hole 38 is not closed. Bar 59 is provided on the opposite side of contact part 57 with respect to piston part 53. Bar 59 opens and closes the valve element 58 of second valve chamber 36 which is described hereinbelow; bar 59 has a diameter which is smaller than that of communication hole 38. Piston seal 60 is provided at the outer circumference of piston part 53 of control piston 51. Piston seal 60 prevents leakage of brake fluid via the gap between piston part 53 and large diameter chamber 42.

Valve 58, which is capable of closing communication hole 38, is provided in second valve chamber 36. Valve spring 62 having a fixed force is provided between valve element 58 and end surface 61 of second valve chamber 36.

Seal member 63 is provided in seal chamber 34. Seal member 63 prevents the leakage of brake fluid within first valve chamber 33 into small diameter chamber 41 of control chamber 35 via a gap between through hole 37 and axial part 52 of control piston 51.

Relief valve 22 is comprising the above-described valve member 46, valve member spring 49, and control piston 51; control valve 31 is essentially comprising control piston 51, control spring 55, valve spring 62, and valve element 58.

Next, the operation of a brake fluid pressure control apparatus 1 in accordance with the first preferred embodiment of the present invention having the structure described above will be explained. The operation of the electromagnetic normally-closed valve 7 and flow valve 2 are identical to those conventionally employed, so that an explanation thereof will be omitted here.

First, as shown in Fig. 1, in the state in which braking is not being conducted, the control piston 51 of valve mechanism 32 is resting so that the contact part 57 is in contact with the end surface 56 on the side of the second valve chamber 36 of the control chamber 35, as a result of the force applied by control spring 55. By means of the bar 59 of control piston 51, valve element 58 is moved in opposition to the force of valve spring 62 in a direction far from control chamber 35, and communication hole 38 is placed in an opened state. Furthermore, valve member 46 is placed in a state in which it is moved in the direction of first pump discharge communication port 39.

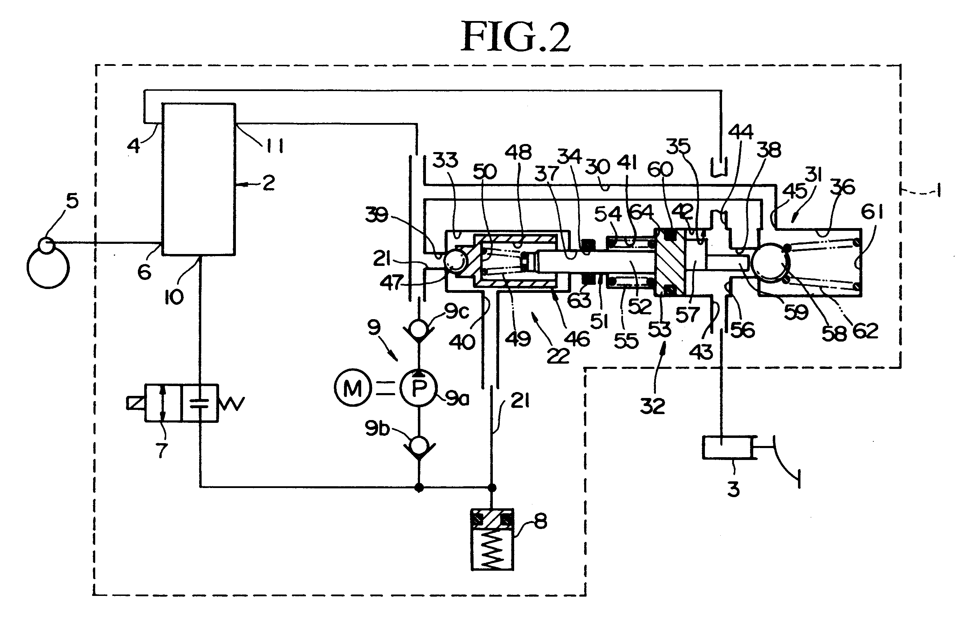

When the above state changes to a state of braking and brake fluid pressure is generated by master cylinder 3, the fluid pressure from master cylinder 3 flows from master cylinder connection port 43 into control chamber 35 and acts on piston part 53 of control piston 51. In addition, the fluid pressure from master cylinder 3 is transmitted from flow valve connection port 44 to master cylinder communication port 4 of flow valve 2. Furthermore, by means of the action of the brake fluid pressure on piston part 53, as shown in Fig. 2, control piston 51 is moved in the direction of the first valve chamber 33 in opposition to the force of control spring 55, and comes into contact with step 64 between large diameter chamber 42 and small diameter chamber 41. By means of this, the contact of bar 59 of control piston 51 is released, and as a result of the force of valve spring 62, valve element 58 closes communication hole 38. As a result of the movement of axial part 52 of control piston 51, valve member spring 49 is compressed. As a result of the force resulting from this compression of the valve member spring 49, valve member 46 maintains the first pump discharge connection port 39 in a state of closure.

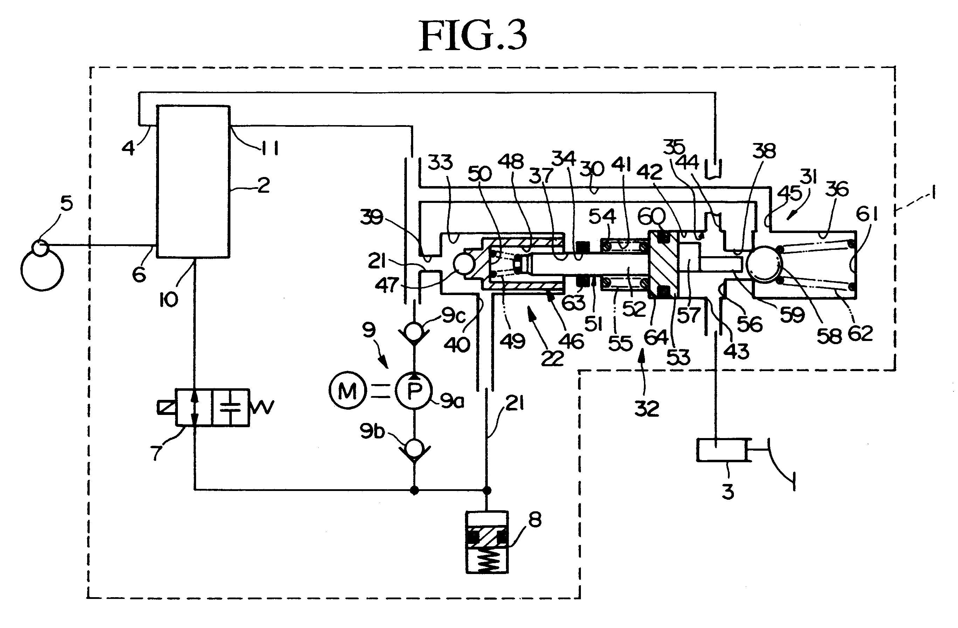

In this state, antiskid control is activated, and when discharge pressure of pump 9 which is greater than the force applied as a result of the compression of valve member spring 49 acts on valve member 46, as shown in Fig. 3, valve member 46 moves in the direction of control chamber 35 in opposition to the force of valve member spring 49, and first pump discharge connection port 39 is opened. By means of this, the excess discharge pressure of pump 9 escapes to reservoir 8 via relief bypass path 21. As a result, the discharge pressure of pump 9 which is transmitted to pump communication port 11 of flow valve 2 is controlled at an essentially constant level. The discharge pressure of pump 9 at this time is also transmitted to second valve chamber 36 via control bypass path 30. However, as communication hole 38 is closed by valve element 58, this discharge pressure is not transmitted to master cylinder 3 via control bypass path 30.

Then, when braking is released during the above-described antiskid control, when the fluid pressure of master cylinder 3 is reduced, the fluid pressure acting on piston part 53 of control piston 51 is reduced. As a result, as shown in Fig. 1, control piston 51 is moved in the direction of the second valve chamber 36 by the force of the control spring 55, so that contact part 57 is caused to come into contact with end surface 56 of control chamber 35. By means of this, valve element 58 is moved in a direction far from control chamber 35, in opposition to the force of valve spring 62, and communication hole 38 is opened. As a result, the remaining fluid within reservoir 8 which is let in and discharged by pump 9 is directly returned to master cylinder 3 via control bypass path 30. Accordingly, in the case in which braking is released during antiskid control, no brake fluid is discharged to flow valve 2. As a result, it is obvious that no brake fluid flows to wheel cylinder 5, so that the overshoot phenomenon will not occur. Accordingly, it is possible to reduce the fluid pressure of wheel cylinder 5 promptly in accordance with the cancellation of braking.

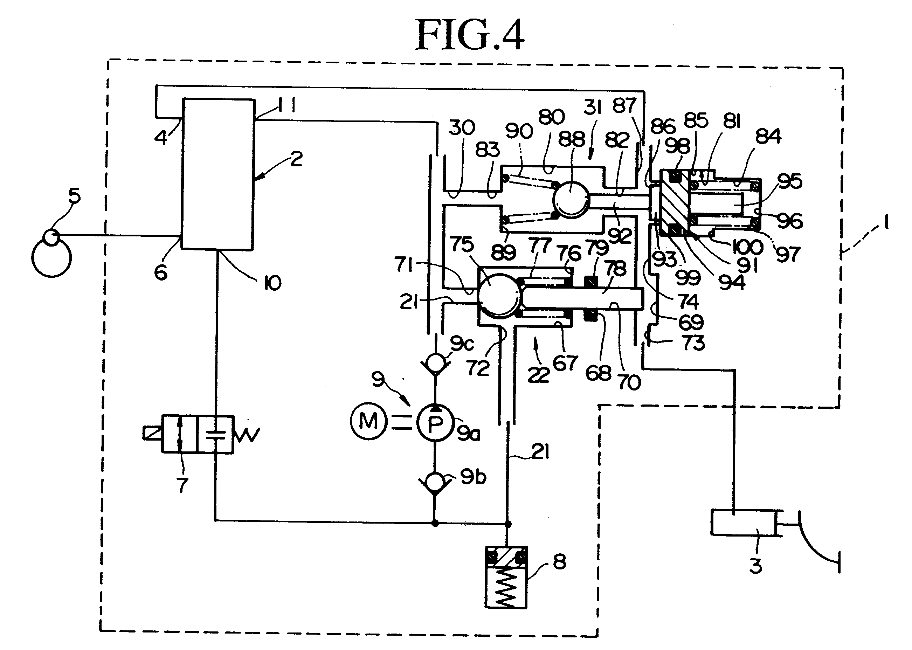

Next, a brake fluid pressure control apparatus in accordance with a second preferred embodiment will be explained with reference to Fig. 4. This second preferred embodiment differs from the first preferred embodiment essentially in that the valve opening pressure of the relief valve conforms to the fluid pressure generated by means of the master cylinder, and in that the relief valve and control valve have separate constructions; thus, explanation will center on the portions which differ.

The brake fluid pressure control apparatus 1 in accordance with the second preferred embodiment is provided in the same manner as the first preferred embodiment, with a relief bypass path 21 which connects reservoir 8 with a path between the discharge side of pump 9 and the pump communication port 11 of flow valve 2. Furthermore, a control bypass path 30 is provided which connects master cylinder 3 and a path between the discharge side of pump 9 and the pump communication port 11 of flow valve 2.

A relief valve 22, which permits the escape of excess discharge pressure of pump 9 to reservoir 8, is provided on relief bypass path 21. Hereinbelow, explanation will be made with respect to this relief valve 22.

Relief valve 22 is provided with a first valve chamber 67, a seal chamber 68, and a master cylinder communication chamber 69. Seal chamber 68 is provided at a distance from first valve chamber 67. Master cylinder communication chamber 69 is provided on the opposite side of seal chamber 68 with respect to first valve chamber 67, and is separated therefrom. A through hole 70 which penetrates first valve chamber 69, seal chamber 68, and master cylinder communication chamber 69 is provided between first valve chamber 67, and master cylinder communication chamber 69. First valve chamber 67, seal chamber 68, master cylinder communication chamber 69, and through hole 70 are disposed coaxially.

First valve chamber 67 is provided with a first pump discharge connection port 71, and a reservoir connection port 72. First pump discharge connection port 71 is provided on the opposite side of first valve chamber 67 with respect to seal chamber 68 and having a common axis with first seal chamber 67; this first pump discharge connection port 71 is connected to the discharge side of pump 9 of relief bypass path 21. Reservoir connection port 72 is provided in a perpendicular manner with respect to first valve chamber 67.

Master cylinder communication chamber 69 is provided with a master cylinder connection port 73 and a coupling port 74. Master cylinder connection port 73 is provided in a direction perpendicular to the axis of master cylinder communication chamber 69 and is connected to master cylinder 3. Coupling port 74 is provided on the opposite side with respect to master cylinder connection port 73.

A valve element 75 which is capable of closing first pump discharge connection port 71 is provided within first valve chamber 67. A spring 77 having a fixed force is provided between this valve element 75 and end surface 76 of first valve chamber 67.

A piston 78, one end of which is in contact with valve element 75 within first valve chamber 67, and the other end of which projects into master cylinder communication chamber 69, is inserted in through hole 70.

Furthermore, seal member 79 is provided in seal chamber 68. Seal member 79 prevents the passage of brake fluid between first valve chamber 67 and master cylinder communication chamber 69 via a gap between piston 78 and through hole 70.

A control valve 31, which closes when the fluid pressure generated from master cylinder 3 becomes high as a result of braking, and which opens when the fluid pressure generated from master cylinder 3 becomes low as a result of the release of braking, is provided on control bypass path 30. Hereinbelow, explanation will be given with respect to this control valve 31.

Control valve 31 is provided with second valve chamber 80, and control chamber 81, which is provided at a distance from second valve chamber 80. A communication hole 82 (a part of control bypass path 30), which places second valve chamber 80 and control chamber 81 in a state of communication, is provided between second valve chamber 80 and control chamber 81. Second valve chamber 80, control chamber 81, and communication hole 82 are disposed so as to be coaxial.

A second pump discharge connection port 83 is provided in second valve chamber 80. Second pump discharge connection port 83 is provided on the opposite side of second valve chamber 80 with respect to control chamber 81 and so as to be coaxial with second valve chamber 80; it is connected to the discharge side of pump 9 of control bypass path 30.

Control chamber 81 is comprising small diameter chamber 84, large diameter chamber 85, and communication chamber 86. Small diameter chamber 84 is provided at a position which is furthest removed from second valve chamber 80. Large diameter chamber 85 is provided on the same side of small diameter chamber 84 as second valve chamber 80; it has a diameter which is larger than the diameter of the small diameter chamber 84 by a fixed amount. Communication chamber 86 is provided on the same side of large diameter chamber 85 as second valve chamber 80; it has a diameter which is smaller than the diameter of the large diameter chamber 85 by a fixed amount.

Flow valve connection port 87 is provided at the connection portion of communication chamber 86 and communication hole 82 in a direction perpendicular to the axis of communication chamber 86. Flow valve connection port 87 is connected to the master cylinder communication port 4 of flow valve 2. The above-described coupling port 74 is connected at the side opposite that of flow valve connection port 87.

A valve element 88 which is capable of closing communication hole 82 is provided within second valve chamber 80. A valve spring 90 having a fixed force is provided between valve element 88 and end surface 89 of second valve chamber 80.

A control piston 91 is inserted into control chamber 81 and communication hole 82. This control piston 91 is provided with bar 92, coupling part 93, piston part 94, and axial part 95. Bar 92 has a diameter which is smaller than that of communication hole 82, is inserted into communication hole 82, and can be placed in contact with valve element 88. Coupling part 93 is provided on the opposite side of bar 92 with respect to second valve chamber 80; it has a diameter which is smaller than that of communication chamber 86. Piston part 94 is provided on the opposite side of coupling part 93 with respect to second valve chamber 80, and is engaged within large diameter chamber 85 in a slidable manner. Axial part 95 is provided on the opposite side of piston part 94 with respect to second valve chamber 80; it has a diameter which is smaller than that of small diameter chamber 84.

A control spring 97 having a fixed force is provided between piston part 94 and end surface 96 of small diameter chamber 84, which is on the opposite side thereof with respect to second valve chamber 80, in a state so that axial part 95 is inserted into the interior thereof. Piston seal 98 is provided at the outer circumference of piston part 94. This piston seal 98 prevents the leakage of brake fluid through a gap between piston part 94 and large diameter chamber 85.

Next, the operation of a brake fluid control apparatus 1 in accordance with the second preferred embodiment having the above-described structure will be explained. As in the case of the first preferred embodiment, the electromagnetic normally-closed valve 7 and the flow valve 2 operate in a manner identical to that of those conventionally used, so that an explanation thereof will be omitted here.

First, in the state in which braking has not been conducted, as shown in Fig. 4, as a result of the force of control spring 97, control piston 91 of control valve 31 rests so that piston part 94 is in contact with step 99 between large diameter chamber 85 and communication chamber 86. In this state, valve element 88 is moved in a direction far from control chamber 81 in opposition to the force of valve spring 90 by means of bar 92 of control piston 91. At this time, communication hole 82 is in an opened state. Furthermore, at this time, valve element 75 of relief valve 22 maintains first pump discharge communication port 71 in a closed state as a result of the force of spring 77.

When a braking state occurs and brake fluid pressure is generated by means of master cylinder 3, the fluid pressure of this master cylinder 3 acts on piston part 94 of control piston 91 and on coupling part 93. When this occurs, control piston 91 moves in a direction far from second valve chamber 80 in opposition to the force of control spring 97, and comes into contact with step 100 between large diameter chamber 85 and small diameter chamber 84. By means of this, valve element 88 releases the contact of bar 92 of control piston 91, and communication hole 82 is closed as a result of the force of valve spring 90. At this time, in relief valve 22, the fluid pressure generated by master cylinder 3 acts on piston 78 which is projecting into master cylinder communication chamber 69. As a result, relief valve 22 maintains first pump discharge connection port 71 in a closed state as a result of the force of spring 77 and the fluid pressure generated by means of master cylinder 3.

In the case in which antiskid control is put into operation in this state, when the discharge pressure of pump 9 becomes greater than the combined force of the force of spring 77 and the fluid pressure generated by master cylinder 3 which acts on piston 78, valve element 75 of relief valve 22 moves in such a direction that it approaches master cylinder communication chamber 69, and first pump discharge connection port 71 is opened. By means of this, the excess reservoir 8 via relief bypass path 21, and the discharge pressure of pump 9 which is transmitted to pump communication port 11 of flow valve 2 is controlled at a level which is always greater than the fluctuating brake fluid pressure of master cylinder 3 by an amount which is equal to the fixed force of spring 77. At this time, the discharge pressure of pump 9 is transmitted to the second valve chamber 80 of control valve 31 via control bypass path 30; however, communication hole 82 is closed by valve element 88, so that this discharge pressure is not transmitted to master cylinder 3 via control bypass path 30.

Then, when braking is released during the above-described antiskid control, and the fluid pressure generated by master cylinder 3 is reduced, the fluid pressure acting on piston part 94 of control piston 91 and on coupling part 93 is reduced. As a result, as shown in Fig. 4, control piston 91 moves in such a direction as to approach second valve chamber 80 by means of the force of control spring 97, and thus brings piston part 94 into contact with end surface 99 of control chamber 81. By means of this, valve element 88 moves in opposition to the force of valve spring 90 in the direction far from control chamber 81, and communication hole 82 is opened. By means of this, the remaining fluid within reservoir 8 which is let in and discharged from pump 9 is returned directly to master cylinder 3 via control bypass path 30. Accordingly, as in the case of the first preferred embodiment, in the case in which braking is released during antiskid control, brake fluid is no longer discharged to flow valve 2, so that brake fluid no longer flows to the side of wheel cylinder 5; it is thus possible to promptly reduce the fluid pressure of wheel cylinder 5 in accordance with the release of braking without the occurrence of the overshoot phenomenon.

## Claims

1. A pressure control apparatus for antiskid brake systems of wheeled vehicles, comprising:
(A) a master cylinder for delivering pressure by means of a brake fluid in accordance with an operation of a brake pedal;
(B) a wheel cylinder for exerting braking force to a wheel by means of brake fluid pressure;
(C) a normally closed valve for opening and closing at decrease and increase of brake fluid pressure, respectively;
(D) a reservoir for receiving brake fluid at decrease of brake fluid pressure;
(E) a pump for charging with said brake fluid from said reservoir and for discharging said brake fluid, said pump having an intake side and an discharge side;
(F) a flow valve including
(a) a casing having
(1) a master cylinder communication port for communicating with said master cylinder,
(2) a wheel cylinder communication port for communicating with said wheel cylinder,
(3) a reservoir communication port for communicating with said reservoir and said intake side of said pump through said normally-closed valve, and
(4) a pump communication port for communicating with said discharge side of said pump,
(b) a spool movable within said casing, and
(c) a spring for urging said spool toward a stationary position,
wherein when said spool is at said stationary position, communication between said master cylinder communication port and said wheel cylinder communication port is enabled; and when said spool is displaced from said stationary position due to a pressure difference on both side thereof resultant from opening of said normally-closed valve, communication between said master cylinder communication port and said wheel cylinder communication port is restricted, said wheel cylinder communication port is communicated with said reservoir communication port, and, in a state in which said normally-closed valve is closed, an approximate fixed flow amount of said brake fluid from said pump communication port to said wheel cylinder communication port is enabled,
(G) a control bypass line for connecting said master cylinder and said discharge side of said pump, and
(H) a control valve provided on said control bypass line for closing the bypass line when brake fluid pressure is higher a predetermined value, and for opening the bypass line when brake fluid pressure is not higher than said predetermined value.

2. A pressure control apparatus in accordance with Claim 1, which further comprises
a relief bypass line connecting said discharge side of said pump and said reservoir, and
a relief valve provided on said relief bypass line for allowing escape of excessive discharge pressure.

3. A pressure control apparatus in accordance with Claim 2, wherein said control valve and said relief valve are aligned in series.

4. A pressure control apparatus in accordance with Claim 2, wherein said control valve comprises:
a control piston for receiving brake fluid pressure,
a control spring urging said control piston against said brake fluid pressure,
a valve for opening and closing said control bypass line,
a valve spring for urging said valve in a direction of closing of said control bypass path, and
a bar for urging said valve opposing said valve spring so as to open said control bypass line by means of the force of said control spring; and for, when said control piston receives brake pressure from said master cylinder and moves against said control spring, releasing pressure to said valve so as to close said control bypass line by means of said valve.

5. A pressure control apparatus in accordance with Claim 3, comprising:
a control piston for receiving brake fluid pressure,
a control spring for urging said control piston against said brake fluid pressure,
a valve for opening and closing said control bypass line,
a valve spring for urging said valve in a direction of closing of said control bypass line, and
a bar for applying pressure to said valve, moving said valve against said valve spring so as to open said control bypass line by means of the force of said control spring; and for, when said control piston receives brake pressure from said master cylinder and moves against said control spring, releasing pressure to said valve so as to closing said control bypass line by means of said valve; and
said relief valve;
an axial part provided on an opposite side of said control piston with respect to said bar;
a valve member, on which pump discharge pressure acts to open and close said relief bypass line, and
a valve member spring provided between said axial part and said valve member, for urging said valve member in a direction of closing said relief bypass line, and which is compressed when said control piston receives brake fluid pressure and moves in opposition to a force of said control spring.
